# EUROPÄISCHE PATENTSCHRIFT

(11) **EP 3 812 863 B1**
(45) Veröffentlichungstag und Bekanntmachung des Hinweises auf die Patenterteilung: **17.01.2024**
(21) Anmeldenummer: 20198583.5
(22) Anmeldetag: 28.09.2020
(51) Int. Cl.: G05D 1/00

(54) **BEWEGBARE MASCHINE**
MOVABLE MACHINE
MACHINE MOBILE

(30) Priorität: 24.10.2019 DE 102019128782
(43) Veröffentlichungstag der Anmeldung: 28.04.2021
(73) Patentinhaber: SICK AG, 79183 Waldkirch (DE)
(72) Erfinder: Ams, Mathias, 79211 Denzlingen (DE)

(56) Entgegenhaltungen:
- EP-A1- 2 428 862
- EP-A1- 2 447 733
- EP-A1- 2 527 868
- WO-A1-2007/085330
- KR-B1- 102 002 803
- US-A1- 2012 327 190
- US-A1- 2018 259 966
- US-A1- 2018 326 586

## Beschreibung

Die vorliegende Erfindung betrifft eine bewegbare Maschine nach dem Oberbegriff von Anspruch 1 und ein Verfahren mit einer bewegbaren Maschine nach dem Oberbegriff von Anspruch 11.

In Anwendungen mit bewegbaren Maschinen, also insbesondere autonomen mobilen Maschinen bzw. führerlosen Fahrzeugen gibt es die Herausforderung, eine Position der bewegbaren Maschine exakt zu kennen, da anhand der Position beispielsweise das Umschalten von Schutzeinrichtungen erforderlich ist.

Das Umschalten der Schutzeinrichtung ist erforderlich, da sich die funktionale Sicherheit situativ an die Anforderung der Anwendung anpassen muss. Beispielsweise ist eine Primärschutzfunktion, z. B. eine Personendetektion mittels sicherem Laserscanner ungeeignet, da diese die Automatisierungsanwendung stören würde.

Beispielsweise fährt ein autonomes Fahrzeug ohne Spurführung, sondern mittels einer Kartennavigation durch eine Industrieanlage. Ein eigensicherer Laserscanner übernimmt eine Primärschutzfunktion, d. h. eine Personendetektion und stoppt dann ggf. das autonome Fahrzeug. An Engstellen, Übergabestellen usw. muss die Sicherheitsfunktion des autonomen Fahrzeugs angepasst werden, da sonst Prozessstillstände drohen.

Eine standardmäßige Absicherung über eigensichere Laserscanner funktioniert bei einer Durchfahrt von Engstellen beispielsweise nicht, da die Engstelle eine Unterbrechung bzw. einen Eingriff in das Schutzfeld des Laserscanners zu Folge hätte oder bei einem schmalen Schutzfeld, welches noch durch die Engstelle passen würde, könnten Quetschstellen für Personen entstehen.

Eine standardmäßige Absicherung über eigensichere Laserscanner funktioniert bei einer Anfahrt von Übergangsstationen beispielsweise nicht, da die Übergabestation eine Unterbrechung bzw. einen Eingriff in das Schutzfeld des Laserscanners zu Folge hätte.

Die US 2012/0327190 A1 offenbart ein Überwachungssystem mit mindestens einer 3D-TOF-Kamera zur Überwachung eines, insbesondere sicherheitskritischen, Bereichs, mit einer Auswerteeinheit, die bei einem Eindringen eines Objekts in den überwachten Bereich eine Sicherheitsfunktion aktiviert, wobei die Auswerteeinheit derart ausgestaltet ist, dass die Aktivierung der Sicherheitsfunktion unterbleibt, wenn an dem eindringenden Objekt Freigabeelemente erkannt werden.

Die EP 2 447 733 A1 offenbart einen optoelektronischen Sensor, insbesondere Laserscanner mit einem Lichtsender zum Aussenden eines Lichtstrahls in eine Überwachungsebene, einem Lichtempfänger zum Erzeugen eines Empfangssignals aus dem von Objekten in der Überwachungsebene remittierten Lichtstrahl, einer beweglichen Ablenkeinheit zur periodischen Ablenkung des ausgesandten Lichtstrahls, um im Verlauf der Bewegung die Überwachungsebene abzutasten, einer Auswertungseinheit, die dafür ausgebildet ist, aus dem Empfangssignal Informationen über Objekte in der Überwachungsebene zu gewinnen sowie mit einer Frontscheibe in dem Lichtweg des ausgesandten Lichtstrahls, wobei die Frontscheibe als Freiformfläche ausgebildet ist, die in einem Schnitt senkrecht zu der Überwachungsebene eine Krümmung aufweist.

Die EP 2 527 868 A1 offenbart einen entfernungsmessenden optoelektronischen Sicherheitssensor zur Überwachung eines Überwachungsbereichs, wobei der Sicherheitssensor einen Lichtempfänger zur Erzeugung eines Empfangssignals bei Lichtempfang aus dem Überwachungsbereich sowie eine Auswertungseinheit aufweist, die dafür ausgebildet ist, mit Hilfe des Empfangssignals Objekte in dem Überwachungsbereich zu erfassen und deren Position einschließlich deren Abstand zu dem Sicherheitssensor zu ermitteln und einen unzulässigen Objekteingriff in einen Schutzbereich innerhalb des Überwachungsbereichs als Abschaltereignis zu erkennen und aufgrund dessen ein Absicherungssignal auszugeben, mit einem Speicher zum Ablegen einer Historie mit Objekteingriffsinformationen der Abschaltereignisse und eine Diagnoseeinheit, die dafür ausgebildet ist, in dem Speicher abgelegte Abschaltereignisse anhand der Objekteingriffsinformationen zu klassifizieren und die derart aufbereiteten Objekteingriffsinformationen einschließlich einer Klasseninformation auszugeben.

Die US 2018/259966 A1 offenbart autonome Fahrzeuge und zugehörige mechanische, elektrische und elektronische Hardware, Computersoftware, einschließlich Autonomieanwendungen, Bildverarbeitungsanwendungen usw., und Computersysteme sowie drahtgebundene und drahtlose Netzwerkkommunikation zur Erleichterung der autonomen Steuerung von Fahrzeugen, insbesondere Systeme, Geräte und Methoden, die für die Navigation autonomer Fahrzeuge unter einer oder mehreren Fehlerbedingungen konfiguriert sind. In einigen Beispielen kann ein Verfahren das Lokalisieren eines autonomen Fahrzeugs, den Zugriff auf Kartendaten zur Identifizierung sicherer Zonen, das Berechnen von Fahrparametern und alternativen Fahrparametern, das Erkennen eines anormalen Ereignisses und das Anwenden alternativer Fahrparameter auf eine Fahrzeugsteuereinheit umfassen.

Die KR 102 002 803 B1 offenbart ein Unfallkontrollsystem unter Verwendung einer UWBbasierten Echtzeitpositionierung. Ein Ziel besteht darin, ein System bereitzustellen, das ein Echtzeit-Positionierungssystem verwendet, um den aktuellen Standort eines Arbeiters an einem Arbeitsplatz in Echtzeit zu identifizieren, und das es ermöglicht, Automatisierungsgeräte in einer Zone, die zur Sicherheit des Arbeiters verbunden ist, anzuhalten. Das System bietet eine Alarmfunktion, wenn sich der Arbeiter der zuvor gespeicherten Zone (Zugangsbeschränkungszone) nähert. Um das Ziel zu erreichen, umfasst das Unfallkontrollsystem, das UWB-basierte Echtzeitpositionierung verwendet, Folgendes: ein UWB-Tag, das von einem Arbeiter getragen wird; eine Vielzahl von UWB-Ankern, die rund um eine Prozesslinie installiert sind, in der ein Industrieroboter, ein Förderband und ein Motor installiert sind, um den Standort des Arbeiters vom UWB-Tag zu empfangen und Temperatur, Luftfeuchtigkeit, Beleuchtung und eine Frequenz des Prozesses zu erfassen; einen Zugangspunkt, um den Standort des Arbeiters sowie die Temperatur, die Luftfeuchtigkeit, die Beleuchtung und die Frequenz der Prozesslinie von den mehreren UWB-Ankern zu empfangen; einen Server zum Empfangen und Speichern des Standorts des Arbeiters sowie der Temperatur, der Luftfeuchtigkeit, der Beleuchtung und der Frequenz der Prozesslinie vom Zugangspunkt und zum Bestimmen, ob sich der Standort des Arbeiters innerhalb einer voreingestellten Zugangsbeschränkungszone befindet; und eine SPS-Box zur Steuerung, um den Betrieb des Industrieroboters, des Förderbands und des Motors in der Prozesslinie zu stoppen, wenn Näherungsinformationen, die angeben, dass sich der Standort des Arbeiters innerhalb der Zugangsbeschränkungszone befindet, vom Server über den Zugangspunkt empfangen werden.

Eine Aufgabe der Erfindung besteht darin, eine Lösung für die oben genannten Anwendungen bereitzustellen.

Die Aufgabe wird gemäß Anspruch 1 gelöst durch eine bewegbaren Maschine, mit einem Sicherheitssystem, mit einer Sicherheitssteuerung, mit einem Lokalisierungssystem, mit einem Entfernungssensor zur mindestens flächigen Überwachung eines Überwachungsbereiches und mit einer Konturerkennungseinheit, wobei mittels dem Lokalisierungssystem eine Position eines Sicherheitsortes identifizierbar ist und mittels dem Entfernungssensor und der Konturerkennungseinheit eine Kontur des Sicherheitsorts identifizierbar ist, wobei bei Identifizierung der Position des Sicherheitsortes und der Kontur des Sicherheitsortes mittels der Sicherheitssteuerung eine Veränderung der Sicherheitsfunktion des Sicherheitssystems erfolgt.

Die Aufgabe wird weiter gelöst durch ein Verfahren mit einer bewegbaren Maschine, mit einem Sicherheitssystem, mit einer Sicherheitssteuerung, mit einem Lokalisierungssystem, mit einem Entfernungssensor zur mindestens flächigen Überwachung eines Überwachungsbereiches und mit einer Konturerkennungseinheit, mittels dem Lokalisierungssystem eine Position eines Sicherheitsortes identifiziert wird und mittels dem Entfernungssensor und der Konturerkennungseinheit eine Kontur des Sicherheitsorts identifiziert wird, wobei bei Identifizierung der Position des Sicherheitsortes und der Kontur des Sicherheitsortes mittels der Sicherheitssteuerung eine Veränderung der Sicherheitsfunktion des Sicherheitssystems durchgeführt wird.

Bei der bewegbaren Maschine bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die bewegbare Maschine weist somit einen Antrieb auf und kann in verschiedenen Richtungen bewegt werden.

Der Sicherheitspunkt (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem bzw. eine Schutzeinrichtung oder eine Sicherheitsfunktion der bewegbaren Maschine anzupassen, um sowohl einen Personenschutz wie auch eine Maschinenverfügbarkeit zu gewährleisten. Bei dem Sicherheitspunkt handelt es sich als synonyme Bezeichnung um einen Sicherheitsort, also keinen singularen Punkt.

Das Sicherheitssystem wird mindestens durch die Sicherheitssteuerung, das Lokalisierungssystem, den Entfernungssensor und die Konturerkennungseinheit gebildet. Die Konturerkennungseinheit und das Lokalisierungssystem sind dabei mit der Sicherheitssteuerung verbunden. Der Entfernungssensor ist mindestens mit der Konturerkennungseinheit verbunden.

Die Sicherheitssteuerung weist Eingänge, eine Verarbeitungseinheit und Ausgänge auf. An die Eingänge sind die Konturerkennungseinheit und das Lokalisierungssystem angeschlossen. Die Ausgänge sind mit Funktionseinheiten wie dem Antrieb, den Bremsen und/oder der Lenkung der bewegbaren Maschine verbunden. Die Sicherheitssteuerung kann eine modulare Sicherheitssteuerung sein die über eine Software programmierbar ist.

Das Lokalisierungssystem kann eine Position der bewegbaren Maschine auf einer Fläche oder im Raum bestimmen. Die Positionsbestimmung kann beispielsweise lokal mittels Funk, beispielsweise durch ein Ultra-Wide-Band-System (UWB) erfolgen. Weiter kann zur Positionsbestimmung eine LIDAR-Navigation vorgesehen sein. Es können auch globale Navigationssysteme zum Einsatz kommen, wie beispielsweise ein GPS-System.

Der Entfernungssensor zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

Die Konturerkennungseinheit ist mit dem Entfernungssensor verbunden. Die Konturerkennungseinheit wertet eine Vielzahl von Messwerten, insbesondere Distanzwerten oder Entfernungswerten des Entfernungssensors aus, um eine erfasste Kontur zu bestimmen. Die Konturerkennungseinheit wandelt die Distanzwerte in geometrische Konturinformation um. Dabei kann es sich um linienförmige, flächige oder räumliche Konturen bzw. Konturdaten handeln.

Die Erfindung beruht darauf, dass ein Sicherheitsort durch zwei voneinander unabhängige Merkmale eindeutig identifizierbar ist. Diese Merkmale sind die Position, sowie die Kontur bzw. Geometrie des Sicherheitsortes bzw. Sicherheitsortes. Damit wird der Sicherheitsort durch ein redundantes, insbesondere diversitäres System identifiziert.

In Weiterbildung der Erfindung kann es sich bei dem Entfernungssensor beispielsweise um einen Laserscanner, einen Sicherheitslaserscanner, eine 3D-Kamera, eine Stereokamera oder eine Lichtlaufzeitkamera oder ähnliches handeln.

Zur Kollisionsvermeidung und zum Schutz von Personen überwacht beispielsweise der Laserscanner, bzw. der Sicherheitslaserscanner ein Schutzfeld, das während der Bewegung der bewegbaren Maschine von Personen nicht betreten werden darf. Erkennt der Laserscanner einen unzulässigen Schutzfeldeingriff, etwa ein Bein einer Person, so löst der Laserscanner ein Not-Halt der bewegbaren Maschine aus. In der Sicherheitstechnik eingesetzte Sensoren müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Der sichere Sensor und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich der bewegbaren Maschine mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich der bewegbaren Maschine mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger Schutzbereich überwacht werden kann.

In Weiterbildung der Erfindung ist mittels dem Lokalisierungssystem und dem Entfernungssensor eine Position des Sicherheitsortes identifizierbar. Der Entfernungssensor gibt dabei die erfassten Rohdaten bzw. Entfernungsdaten an das Lokalisierungssystem weiter. Das Lokalisierungssystem verarbeitet die Rohdaten bzw. Entfernungsdaten und kann beispielsweise aufgrund einer Historie von erfassten Konturdaten der Umgebung und der Umgebung des Sicherheitsortes die Position des Sicherheitsortes identifizieren.

In Weiterbildung weist das Lokalisierungssystem ein Kartenmodel auf, wobei die Sicherheitsorte in dem Kartenmodel eingetragen sind. In dem Kartenmodel bzw. einer elektronischen Karte werden die unterschiedlichen Positionen der Sicherheitsorte eingetragen. Die aktuelle Position und/oder Lage der bewegbaren Maschine wird im Lokalisierungssystem aufgrund erfasster Umgebungskonturen kontinuierlich verarbeitet und auf Übereinstimmung mit einem Sicherheitsort geprüft. Wird eine Übereinstimmung entdeckt, so wird gemäß einer Weiterbildung der Erfindung eine Positionskennung des Sicherheitsortes an die Sicherheitssteuerung übertragen.

In Weiterbildung der Erfindung weist die Position des Sicherheitsortes jeweils mindestens eine Positionskennung auf. Mittels der Positionskennung wird jeder Sicherheitsort jeweils eindeutig identifiziert. Dadurch kann keine Verwechslung mit einem anderen Sicherheitsort erfolgen. Bei der Positionskennung kann es sich um einen eindeutigen Wert oder eine Identifikation, also ID handeln, der oder die beispielsweise in einer Tabelle gespeichert ist. Beispielsweise handelt es sich bei der Positionskennung um eine eindeutige Nummer, beispielsweise eine fortlaufende Nummer oder einen eindeutigen Text. Über jeweilige Tabellenzugriffe wird jeweils ein eindeutiger Wert, bzw. eine Positionskennung einer Position des Sicherheitsortes zugeordnet. Jede Positionskennung gibt es nur ein einziges Mal. Beispielsweise kann die Positionskennung auf Basis der Position des Sicherheitsortes gebildet werden, beispielsweise mittels einer Hash-Funktion.

Die Sicherheitssteuerung aktiviert dann auf der Konturerkennungseinheit eine Konturerkennungsfunktion, d. h. es wird ein Algorithmus aktiviert, der eine zuvor gespeicherte Kontur detektiert und identifiziert.

In Weiterbildung der Erfindung weist die Kontur eines Sicherheitsortes jeweils mindestens eine Konturkennung auf. Mittels der Konturkennung wird jede Kontur eines Sicherheitsortes eindeutig identifiziert. Dadurch kann keine Verwechslung mit einer anderen Kontur eines Sicherheitsortes erfolgen. Diese Konturkennung wird an die Sicherheitssteuerung zurückgemeldet. Bei der Konturkennung kann es sich um einen eindeutigen Wert oder eine Identifikation, also ID handeln, der oder die beispielsweise in einer Tabelle gespeichert ist. Beispielsweise handelt es sich bei der Konturkennung um eine eindeutige Nummer, beispielsweise eine fortlaufende Nummer oder einen eindeutigen Text. Über jeweilige Tabellenzugriffe wird jeweils ein eindeutiger Wert, bzw. eine Konturkennung einer Kontur des Sicherheitsortes zugeordnet. Jede Konturkennung gibt es nur ein einziges Mal. Beispielsweise kann die Konturkennung auf Basis der Kontur des Sicherheitsortes gebildet werden, beispielsweise mittels einer Hash-Funktion.

In Weiterbildung der Erfindung sind die Konturkennung und die Positionskennung eines Sicherheitsortes über eine Korrelationsregel verknüpft. In der Software der Sicherheitssteuerung ist eine Korrelationsregel, beispielsweise eine Tabelle, ein Softwarecode oder ähnliches abgelegt, in welcher eine Zuordnung zwischen der Positionskennung des Lokalisierungssystems und der Konturkennung des der Konturerkennungseinheit verknüpft werden. Beispielsweise wird die Positionskennung des Lokalisierungssystems und der Konturkennung der Konturerkennungseinheit im Kreuzvergleich überprüft.

Wenn beide Teilsysteme eine stimmige und aufeinander zuordenbare Kennung liefern, dann ist ein Sicherheitsort erkannt und die Sicherheitssteuerung kann auf eine andere Schutzmaßnahme bzw. Sicherheitsfunktion umschalten. Das Umschalten der Schutzmaßnahme kann beispielsweise ein Umschalten von Schutzfeldern, eine Größen- oder Formanpassung von Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

Wenn die Positionskennung des Lokalisierungssystems und der Konturkennung des der Konturerkennungseinheit nicht übereinstimmen, dann erkennt das Sicherheitssystem einen Fehler und wechselt in den sicheren Zustand, d. h. das Sicherheitssystem wird verriegelt und wartet beispielsweise auf eine Reset-Prozedur.

In Weiterbildung der Erfindung sendet die Sicherheitssteuerung an das Lokalisierungssystem und/oder an die Konturerkennungseinheit Testvektoren und empfängt Vektoren. Da gemäß der Erfindung auch nicht sichere, nicht eigensichere oder nicht funktionssichere Komponenten, wie z. B. das Lokalisierungssystem, der Laserscanner, die Konturerkennungseinheit usw.) eingesetzt werden, können diese in Weiterbildung der Erfindung auf Systemebene durch die Sicherheitssteuerung diagnostiziert und getestet werden, um für das Sicherheitssystem einen ausreichend hohen Diagnosedeckungsgrad zu erreichen.

Hierzu sendet und empfängt die Sicherheitssteuerung Testvektoren, um das System kontinuierlich auf Plausibilität und fehlerfreie Funktion zu überwachen. Die Testvektoren können beispielsweise Geschwindigkeitswerte, Orientierungswerte, relative Positionsänderungswerte und/oder Referenzkonturen oder dergleichen aufweisen.

In Weiterbildung weist das Sicherheitssystem mindestens einen Sensor auf, der in der Lage ist, eine Bewegung, eine Positionsänderung und/oder eine Geschwindigkeit zu messen. Insbesondere kann der Sensor ein Encoder sein, welcher die Drehposition eines Rades erfasst, wobei der Sensor bzw. der Encoder mit der Sicherheitssteuerung verbunden ist. Durch den Sensor bzw. den Encoder kann ein Diagnosegrad des Systems weiter erhöht werden.

In Weiterbildung der Erfindung weist der Sicherheitsort eine Reflektor-Marke auf.

Zusätzlich zur Konturerkennung können weitere Daten wie z. B. die Signalintensität einer Reflektor-Marke ausgewertet werden, wodurch die erhaltenen Daten einen höheren Integritätslevel aufweisen. Durch die Reflektor-Marke kann eine Diagnosefähigkeit des Systems weiter erhöht werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis 3: jeweils eine bewegbare Maschine mit einem Sicherheitssystem;
- Figur 4 bis 6: das Anfahren einer Übergabestation in nacheinander schematisch dargestellten Schritten mit einem führerlosen Transportfahrzeug;
- Figur 7 bis 10: zeigen eine Anwendung zur Durchfahrung einer Engstelle in nacheinander schematisch dargestellten zeitlichen Schritten;
- Figur 11: zeigt Signalverbindungen zwischen einem Laserscanner als Entfernungssensor, einer Konturerkennungseinheit und einer Sicherheitssteuerung.

In den nachfolgenden Figuren sind identische Teile mit identischen Bezugszeichen versehen.

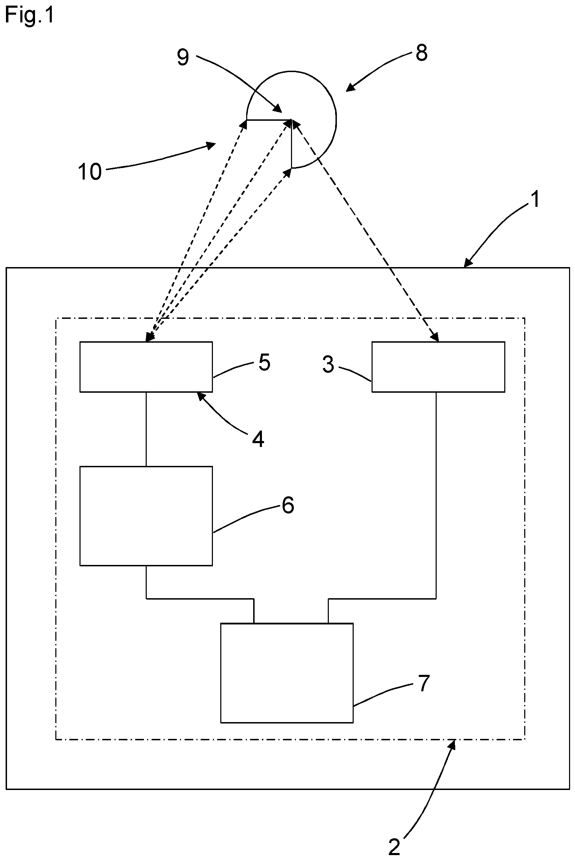

Figur 1 zeigt eine bewegbaren Maschine 1, mit einem Sicherheitssystem 2, mit einer Sicherheitssteuerung 7, mit einem Lokalisierungssystem 3, mit einem Entfernungssensor 4 zur mindestens flächigen Überwachung eines Überwachungsbereiches und mit einer Konturerkennungseinheit 6, wobei mittels dem Lokalisierungssystem 3 eine Position 9 eines Sicherheitspunktes 8 identifizierbar ist, und mittels dem Entfernungssensor 4 und der Konturerkennungseinheit 6 eine Kontur 10 des Sicherheitspunkts 8 identifizierbar ist, wobei bei Identifizierung der Position 9 des Sicherheitspunktes 8 und der Kontur 10 des Sicherheitspunktes 8 mittels der Sicherheitssteuerung 7 eine Veränderung der Sicherheitsfunktion des Sicherheitssystems 2 erfolgt.

Bei der bewegbaren Maschine 1 bzw. mobilen Maschine kann es sich beispielsweise um ein führerloses Fahrzeug bzw. Transportfahrzeug, um ein fahrerloses Fahrzeug bzw. autonomes Fahrzeug, um ein automatisch geführtes Fahrzeug (Automated Guided Vehicles, AGV), um einen automatischen mobilen Roboter (Automated Mobile Robots, AMR), um einen industriemobilen Roboter (Industrial Mobile Robots, IMR) oder um einen Roboter mit bewegbaren Roboterarmen handeln.

Bei dem Sicherheitspunkt 8 handelt es sich als synonyme Bezeichnung um einen Sicherheitsort, also keinen singularen Punkt.

Gemäß Figur 1 ist der Sicherheitsort 8 durch zwei voneinander unabhängige Merkmale eindeutig identifizierbar. Diese Merkmale sind die Position 9, sowie die Kontur 10 bzw. Geometrie des Sicherheitsortes 8 bzw. Sicherheitsortes. Dabei wird der Sicherheitsort 8 beispielsweise durch ein redundantes, insbesondere diversitäres Sicherheitssystem 2 identifiziert. Die Kontur des Sicherheitsortes gemäß Figur 1 ist beispielhaft. Es können andere Konturen oder Formen vorgesehen sein.

Gemäß Figur 1 kann es sich bei dem Entfernungssensor 4 beispielsweise um einen Laserscanner 5, einen Sicherheitslaserscanner, eine 3D-Kamera, eine Stereokamera oder eine Lichtlaufzeitkamera oder ähnliches handeln.

Zur Kollisionsvermeidung und zum Schutz von Personen überwacht beispielsweise der Laserscanner 5, bzw. der Sicherheitslaserscanner ein Schutzfeld, das während der Bewegung der bewegbaren Maschine 1 von Personen nicht betreten werden darf. Erkennt der Laserscanner 5 einen unzulässigen Schutzfeldeingriff, etwa ein Bein einer Person, so löst der Laserscanner 5 ein Not-Halt der bewegbaren Maschine 1 aus.

Das Lokalisierungssystem 3 überträgt die Position der bewegbaren Maschine 1 an die Sicherheitssteuerung 7. Weiter überträgt das Lokalisierungssystem 3 beispielsweise Testvektoren, wie beispielsweise eine Geschwindigkeit und/oder eine Orientierung an die Sicherheitssteuerung 7. Die Geschwindigkeit kann beispielsweise aus zeitlich nacheinander erfassten Positionen bestimmt werden.

Die Konturerkennungseinheit 6 übermittelt die Konturen der Umgebung an die Sicherheitssteuerung 7. Die Konturerkennungseinheit 6 ermittelt die Kontur aus Rohdaten des Entfernungssensors 4. Die Konturerkennungseinheit 6 übermittelt ebenfalls beispielsweise die Geschwindigkeit und die Orientierung der bewegbaren Maschine 1 an die Sicherheitssteuerung 7.

Damit erhält die Sicherheitssteuerung 7 beispielsweise von zwei unabhängigen Systemen die Geschwindigkeit und die Orientierung als Testvektoren. Damit können die Testvektoren gegenseitig verglichen werden und die erhaltenen Positionsdaten und Konturdaten auf Plausibilität hin überprüft werden.

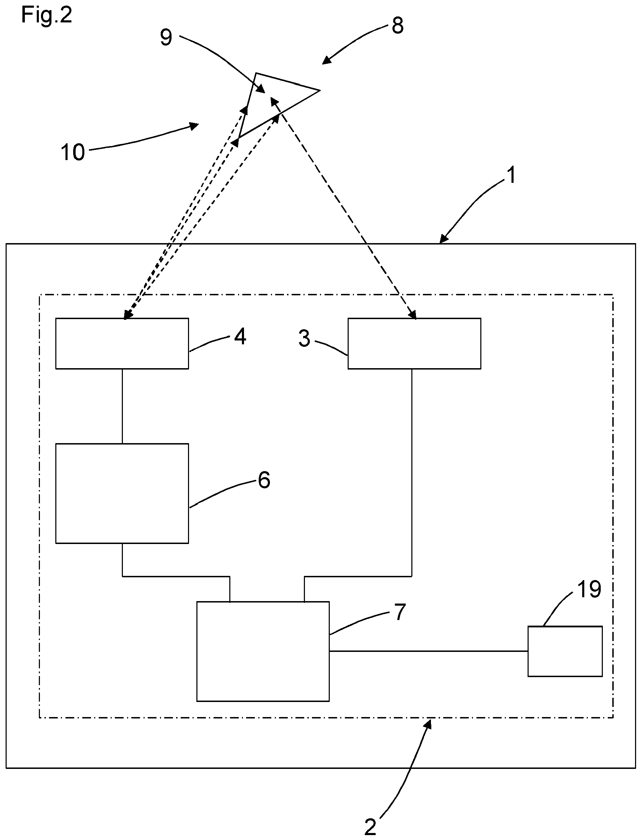

Figur 2 zeigt eine bewegbare Maschine 1 mit den Komponenten gemäß Figur 1. Gemäß Figur 2 weist das Sicherheitssystem 2 mindestens einen Sensor auf, der in der Lage ist eine Bewegung, eine Positionsänderung und/oder eine Geschwindigkeit zu messen. Insbesondere kann der Sensor ein Encoder 19 sein, welcher die Drehposition eines Rades erfasst, wobei der Sensor bzw. der Encoder 19 mit der Sicherheitssteuerung 3 verbunden ist.

Durch den Sensor bzw. Encoder 19 kann ein Diagnosegrad des Systems weiter erhöht werden. Dabei liefert der Encoder 19 beispielsweise die Diagnoseinformation Geschwindigkeit und/oder Orientierung bzw. Richtung der bewegbaren Maschine.

Gemäß Figur 2 weist die Position 9 des Sicherheitsortes 8 jeweils mindestens eine Positionskennung auf. Mittels der Positionskennung wird jeder Sicherheitsort 8 jeweils eindeutig identifiziert. Dadurch kann keine Verwechslung mit einem anderen Sicherheitsort 8 erfolgen.

Die Sicherheitssteuerung 7 aktiviert dann auf der Konturerkennungseinheit 6 eine Konturerkennungsfunktion, d. h. es wird ein Algorithmus aktiviert, der eine zuvor gespeicherte Kontur detektiert und identifiziert.

Gemäß Figur 2 weist die Kontur 10 eines Sicherheitsortes 8 jeweils mindestens eine Konturkennung auf. Mittels der Konturkennung wird jede Kontur 10 eines Sicherheitsortes 8 eindeutig identifiziert. Dadurch kann keine Verwechslung mit einer anderen Kontur 10 eines Sicherheitsortes 8 erfolgen. Diese Konturkennung wird an die Sicherheitssteuerung 7 zurückgemeldet.

Gemäß Figur 2 sind die Konturkennung und die Positionskennung eines Sicherheitsortes 8 über eine Korrelationsregel verknüpft. In der Software der Sicherheitssteuerung 7 ist eine Korrelationsregel, beispielsweise eine Tabelle, ein Softwarecode oder ähnliches abgelegt, in welcher eine Zuordnung zwischen der Positionskennung des Lokalisierungssystems 3 und der Konturkennung des der Konturerkennungseinheit verknüpft werden. Beispielsweise wird die Positionskennung des Lokalisierungssystems 3 und der Konturkennung der Konturerkennungseinheit 6 im Kreuzvergleich überprüft.

Wenn beide Teilsysteme eine stimmige und aufeinander zuordenbare Kennung liefern, dann ist ein Sicherheitsort 8 erkannt und die Sicherheitssteuerung 7 kann auf eine andere Schutzmaßnahme bzw. Sicherheitsfunktion umschalten. Ein Umschalten der Schutzmaßnahme kann auch eine Sicherheitsfunktion, wie beispielsweise eine Kraftbegrenzung des Antriebs sein, auf die umgeschaltet wird.

Das Umschalten der Schutzmaßnahme kann beispielsweise ein Umschalten von Schutzfeldern, eine Größen- oder Formanpassung von Schutzfeldern und/oder eine Umschaltung der Eigenschaften eines Schutzfeldes umfassen.

Zu den Eigenschaften eines Schutzfeldes gehören neben der Form bzw. Größe des Schutzfeldes beispielsweise die Auflösung und/oder die Reaktionszeit des Schutzfeldes.

Wenn die Positionskennung des Lokalisierungssystems und der Konturkennung des der Konturerkennungseinheit nicht übereinstimmen, dann erkennt das Sicherheitssystem 2 einen Fehler und wechselt in den sicheren Zustand, d. h. das Sicherheitssystem 2 wird verriegelt und wartet beispielsweise auf eine Reset-Prozedur.

Gemäß Figur 2 sendet die Sicherheitssteuerung 7 an das Lokalisierungssystem 3 und/oder an die Konturerkennungseinheit 6 Testvektoren und empfängt Vektoren.

Da gemäß der Erfindung auch nicht sichere, nicht eigensichere oder nicht funktionssichere Komponenten, wie z. B. das Lokalisierungssystem, der Laserscanner 5, die Konturerkennungseinheit 6 usw. eingesetzt werden, können diese optional auf Systemebene durch die Sicherheitssteuerung 7 diagnostiziert und getestet werden, um für das Sicherheitssystem 2 einen ausreichend hohen Diagnosedeckungsgrad zu erreichen.

Hierzu sendet und empfängt die Sicherheitssteuerung 7 Testvektoren, um das System kontinuierlich auf Plausibilität und fehlerfreie Funktion zu überwachen.

Die Testvektoren können beispielsweise Geschwindigkeitswerte, Orientierungswerte, relative Positionsänderungswerte und/oder Referenzkonturen oder dergleichen aufweisen.

Gemäß Figur 2 kann der Sicherheitsort 8 eine Reflektor-Marke aufweisen. Zusätzlich zur Konturerkennung können weitere Daten wie z. B. die Signalintensität der Reflektor-Marke ausgewertet werden, wodurch die erhaltenen Daten einen höheren Integritätslevel aufweisen. Durch die Reflektor-Marke kann eine Diagnosefähigkeit des Systems weiter erhöht werden.

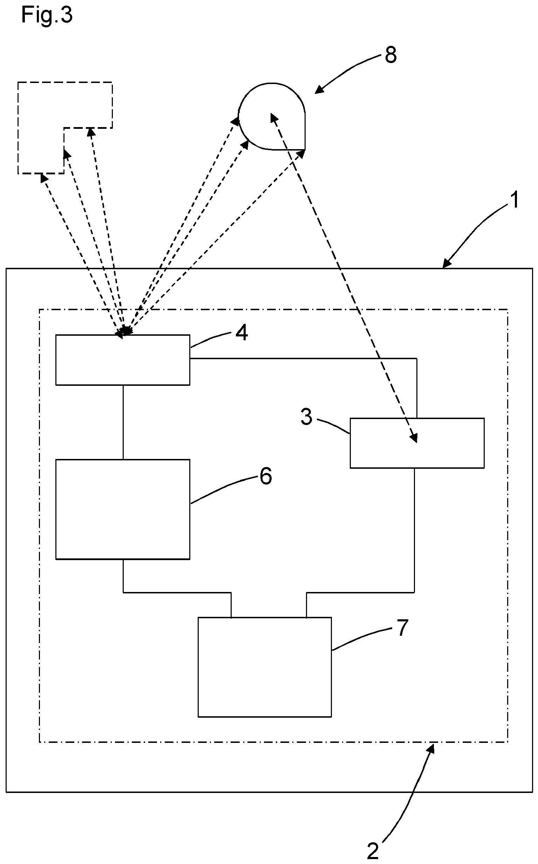

Figur 3 zeigt eine bewegbare Maschine 1 mit den Komponenten gemäß Figur 1. Gemäß Figur 3 weist das Sicherheitssystem 2 mindestens einen Sensor auf, der in der Lage ist eine Bewegung, eine Positionsänderung und/oder eine Geschwindigkeit zu messen. Insbesondere kann der Sensor ein Encoder 19 sein, welcher die Drehposition eines Rades erfasst, wobei der Sensor bzw. der Encoder 19 mit der Sicherheitssteuerung 3 verbunden ist.

Durch den Encoder 19 kann ein Diagnosegrad des Systems weiter erhöht werden. Dabei liefert der Encoder 19 beispielsweise die Diagnoseinformation Geschwindigkeit und/oder Orientierung bzw. Richtung der bewegbaren Maschine.

Gemäß Figur 3 ist mittels dem Lokalisierungssystem 3 und dem Entfernungssensor 4 eine Position 9 des Sicherheitsortes 8 identifizierbar. Der Entfernungssensor 4 gibt dabei die erfassten Rohdaten bzw. Entfernungsdaten an das Lokalisierungssystem 3 weiter. Das Lokalisierungssystem 3 verarbeitet die Rohdaten bzw. Entfernungsdaten und kann beispielsweise aufgrund einer Historie von erfassten Konturdaten der Umgebung und der Umgebung des Sicherheitsortes 8 die Position 9 des Sicherheitsortes 8 identifizieren.

Gemäß Figur 3 weist das Lokalisierungssystem 3 beispielsweise ein Kartenmodel auf, wobei die Sicherheitsorte 8 in dem Kartenmodel eingetragen sind.

In dem Kartenmodel bzw. einer elektronischen Karte werden die unterschiedlichen Positionen 9 der Sicherheitsorte 8 eingetragen. Die aktuelle Position und/oder Lage der bewegbaren Maschine 1 wird im Lokalisierungssystem 3 aufgrund erfasster Umgebungskonturen kontinuierlich verarbeitet und auf Übereinstimmung mit einem Sicherheitsort 8 geprüft. Wird eine Übereinstimmung entdeckt, so wird beispielsweise eine Positionskennung des Sicherheitsortes 8 an die Sicherheitssteuerung 7 übertragen.

Die Sicherheitssteuerung 7 aktiviert dann auf der Konturerkennungseinheit 6 eine Konturerkennungsfunktion, d. h. es wird ein Algorithmus aktiviert, der eine zuvor gespeicherte Kontur detektiert und identifiziert.

Gemäß Figur 3 weist die Kontur 10 eines Sicherheitsortes 8 jeweils mindestens eine Konturkennung auf. Mittels der Konturkennung wird jede Kontur 10 eines Sicherheitsortes 8 eindeutig identifiziert. Dadurch kann keine Verwechslung mit einer anderen Kontur 10 eines Sicherheitsortes 8 erfolgen. Diese Konturkennung wird an die Sicherheitssteuerung 7 zurückgemeldet.

Gemäß Figur 3 sind die Konturkennung und die Positionskennung eines Sicherheitsortes 8 über eine Korrelationsregel verknüpft. In der Software der Sicherheitssteuerung 7 ist eine Korrelationsregel, beispielsweise eine Tabelle, ein Softwarecode oder ähnliches abgelegt, in welcher eine Zuordnung zwischen der Positionskennung des Lokalisierungssystems 3 und der Konturkennung des der Konturerkennungseinheit verknüpft werden. Beispielsweise wird die Positionskennung des Lokalisierungssystems 3 und der Konturkennung der Konturerkennungseinheit 6 im Kreuzvergleich überprüft.

Wenn beide Teilsysteme eine stimmige und aufeinander zuordenbare Kennung liefern, dann ist ein Sicherheitsort 8 erkannt und die Sicherheitssteuerung 7 kann auf eine andere Schutzmaßnahme bzw. Sicherheitsfunktion umschalten. Ein Umschalten der Schutzmaßnahme kann auch eine Sicherheitsfunktion, wie beispielsweise eine Kraftbegrenzung des Antriebs sein, auf die umgeschaltet wird.

Das Umschalten der Schutzmaßnahme kann beispielsweise ein Umschalten von Schutzfeldern, eine Größen- oder Formanpassung von Schutzfeldern und/oder eine Umschaltung der Eigenschaften eines Schutzfeldes umfassen.

Zu den Eigenschaften eines Schutzfeldes gehören neben der Form bzw. Größe des Schutzfeldes beispielsweise die Auflösung und/oder die Reaktionszeit des Schutzfeldes.

Wenn die Positionskennung des Lokalisierungssystems und der Konturkennung des der Konturerkennungseinheit nicht übereinstimmen, dann erkennt das Sicherheitssystem 2 einen Fehler und wechselt in den sicheren Zustand, d. h. das Sicherheitssystem 2 wird verriegelt und wartet beispielsweise auf eine Reset-Prozedur.

Gemäß Figur 3 sendet die Sicherheitssteuerung 7 an das Lokalisierungssystem 3 und/oder an die Konturerkennungseinheit 6 Testvektoren und empfängt Vektoren.

Da gemäß der Erfindung auch nicht sichere, nicht eigensichere oder nicht funktionssichere Komponenten, wie z. B. das Lokalisierungssystem, der Laserscanner 5, die Konturerkennungseinheit 6 usw. eingesetzt werden, können diese optional auf Systemebene durch die Sicherheitssteuerung 7 diagnostiziert und getestet werden, um für das Sicherheitssystem 2 einen ausreichend hohen Diagnosedeckungsgrad zu erreichen.

Hierzu sendet und empfängt die Sicherheitssteuerung 7 Testvektoren, um das System kontinuierlich auf Plausibilität und fehlerfreie Funktion zu überwachen.

Die Testvektoren können beispielsweise Geschwindigkeitswerte, Orientierungswerte, relative Positionsänderungswerte und/oder Referenzkonturen oder dergleichen aufweisen.

Gemäß Figur 3 kann der Sicherheitsort 8 eine Reflektor-Marke aufweisen.

Zusätzlich zur Konturerkennung können weitere Daten wie z. B. die Signalintensität der Reflektor-Marke ausgewertet werden, wodurch die erhaltenen Daten einen höheren Integritätslevel aufweisen. Durch die Reflektor-Marke kann eine Diagnosefähigkeit des Systems weiter erhöht werden.

Gemäß Figur 3 ist mittels dem Lokalisierungssystem 3 und dem Entfernungssensor 4 eine Position 9 des Sicherheitsortes 8 identifizierbar. Der Entfernungssensor 4 gibt dabei die erfassten Rohdaten bzw. Entfernungsdaten an das Lokalisierungssystem 3 weiter. Das Lokalisierungssystem 3 verarbeitet die Rohdaten bzw. Entfernungsdaten und kann beispielsweise aufgrund einer Historie von erfassten Konturdaten der Umgebung und der Umgebung des Sicherheitsortes 8 die Position 9 des Sicherheitsortes 8 identifizieren.

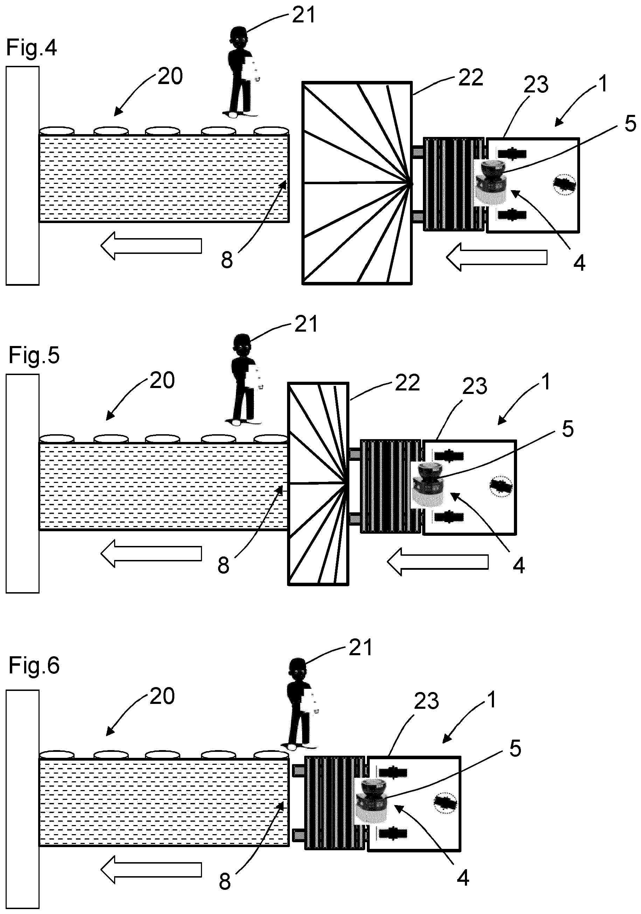

Figur 4 bis Figur 6 zeigen das Anfahren einer Übergabestation in nacheinander schematisch dargestellten Schritten.

Die bewegbare Maschine 1 ist durch ein fahrerloses Transportfahrzeug 23 gebildet, welches Material transportiert. Der Entfernungssensor 4 ist einen Laserscanner 5 welcher ein Schutzfeld 22 vor dem Transportfahrzeug 23 bildet. Der Sicherheitsort 8 ist durch ein erstes Ende einer Fördereinrichtung 20 beispielsweise eines Förderbandes gebildet. Das Ende des Förderbandes ist gekennzeichnet durch eine bestimmte Kontur und eine Position, welche das Sicherheitssystem 2 gemäß beispielsweise Figur 1 ermittelt. Eine Person 21 befindet sich in der Nähe des Förderbandes und soll bei final positioniertem Transportfahrzeug 23 beispielsweise das Material auf das Förderband legen.

Zunächst bewegt sich das fahrerlose Transportfahrzeug 23 gemäß Figur 4 auf das Förderband zu. Gemäß Figur 5 wird das Ende des Förderbandes erfasst und damit die Kontur des Förderbandendes und die Position. Damit wird der Sicherheitsort 8 identifiziert und das Transportfahrzeug 23 wird gemäß Figur 6 in die Zielposition bewegt. Dabei wird das Schutzfeld 22 beispielsweise schrittweise an die Annäherung der Kontur angepasst. Würde die Person 21 in dem Schutzfeld 22 detektiert werden, so stoppt das Transportfahrzeug 23 unverzüglich. Entfernt sich die Person 21 wieder aus dem Gefahrenbereich bzw. dem Schutzfeld 22 kann das Transportfahrzeug 23 seine Bewegung fortsetzen.

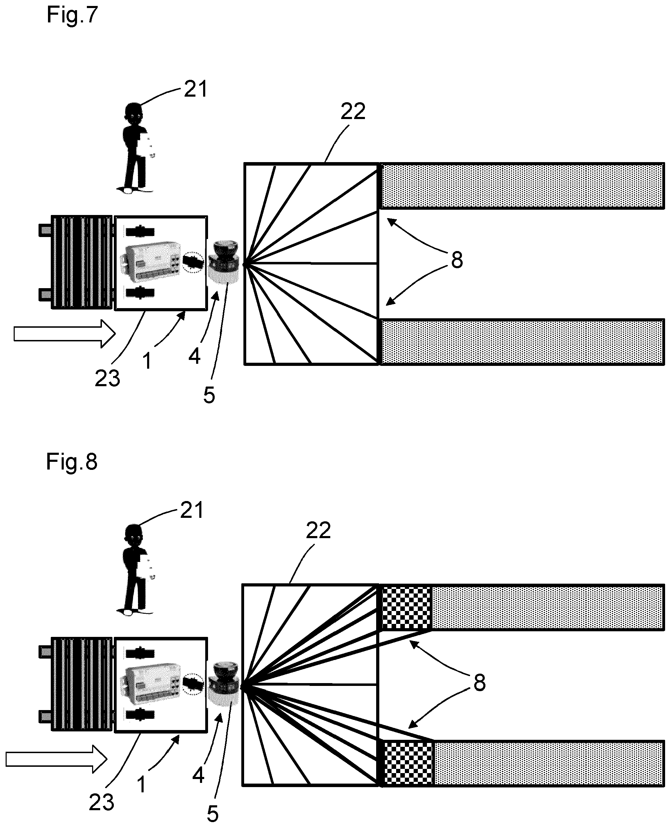

Figur 7 bis Figur 10 zeigt eine Anwendung zur Durchfahrung einer Engstelle in nacheinander schematisch dargestellten zeitlichen Schritten.

Die bewegbare Maschine 1 ist durch ein autonomes Transportfahrzeug 23 gebildet, welches Material transportiert. Der Entfernungssensor 4 ist ein Laserscanner 5 welcher ein Schutzfeld 22 vor dem Transportfahrzeug 23 bildet. Der Sicherheitsort 8 ist durch eine Einfahrt der Engstelle der Durchfahrt gebildet. Die Einfahrt der Engstelle ist gekennzeichnet durch eine bestimmte Kontur und eine Position, welche das Sicherheitssystem 2 gemäß beispielsweise Figur 1 ermittelt. Eine Person 21 befindet sich in der Nähe der Engstelle und darf keiner Gefahr ausgesetzt werden.

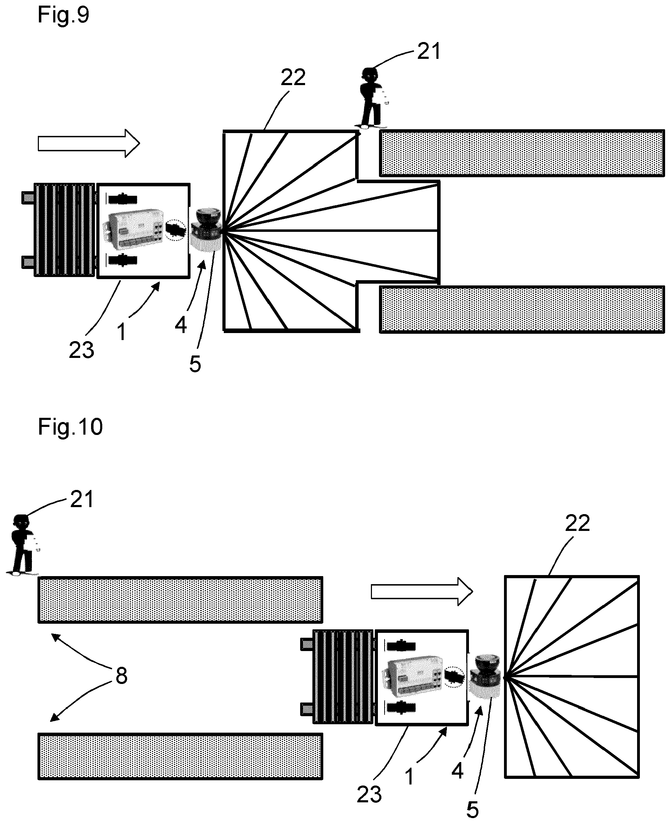

Zunächst bewegt sich das autonome Transportfahrzeug 23 gemäß Figur 7 auf die Engstelle zu. Gemäß Figur 8 wird die Einfahrt an die Engstelle erfasst und damit die Kontur der Einfahrt und die Position. Damit wird der Sicherheitsort 8 identifiziert und das Transportfahrzeug wird gemäß Figur 9 weiter in die Durchfahrt bewegt. Dabei wird das Schutzfeld 22 beispielsweise schrittweise an die Annäherung der Kontur angepasst. Würde die Person 21 in dem Schutzfeld 22 detektiert werden, so stoppt das Transfahrzeug 23 unverzüglich. Entfernt sich die Person 21 wieder aus dem Gefahrenbereich bzw. dem Schutzfeld 22 kann das Transportfahrzeug 23 seine Bewegung fortsetzen. Gemäß Figur 10 hat das Transportfahrzeug 23 die Engstelle durchfahren.

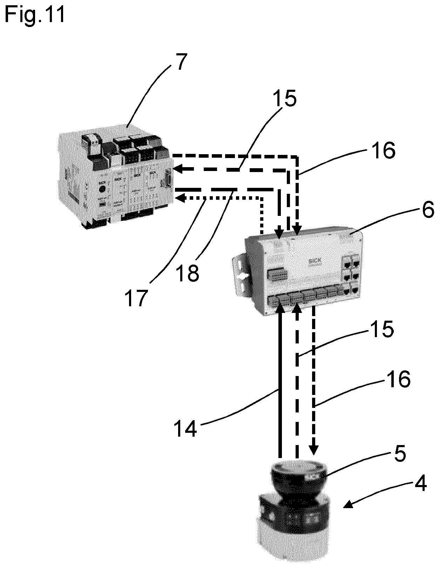

Figur 11 zeigt Signalverbindungen zwischen einem Laserscanner 5 als Entfernungssensor 4, einer Konturerkennungseinheit 6 und einer Sicherheitssteuerung 7. Von dem Laserscanner 5 werden Rohdaten 14 bzw. Entfernungsdaten an die Konturerkennungseinheit 6 gesendet. Der Laserscanner 5 prüft auch Eingriffe in sein Schutzfeld und bildet einen Abschaltpfad 15 zur Sicherheitssteuerung 7. Weiter erhält der Laserscanner 5 Feldsätze 16, also beispielsweise unterschiedliche Schutzfelder bzw. unterschiedliche Schutzfeldkonfigurationen von der Sicherheitssteuerung 7. Die Konturerkennungseinheit 6 sendet vorverarbeitete Ergebnisse 17 als Kennungswerte an die Sicherheitssteuerung 7. Beispielsweise eine Geschwindigkeitskennung eine Positionskennung und/oder eine Konturkennung. Die Sicherheitssteuerung 7 sendet dabei, beispielsweise als Antwort auf die Kennungswerte Testvektoren 18 an die Konturerkennungseinheit 6.

### Bezugszeichen:

1 Bewegbare Maschine
2 Sicherheitssystem
3 Lokalisierungssystem
4 Entfernungssensor
5 Laserscanner
6 Konturerkennungseinheit
7 Sicherheitssteuerung
8 Sicherheitsort
9 Position des Sicherheitsortes
10 Geometrie des Sicherheitsortes
11 Karte des Lokalisierungssystems
12 Positionskennung
13 Konturkennung
14 Rohdaten
15 Abschaltpfad
16 Feldsätze
17 vorverarbeitete Ergebnisse
18 Testvektoren

## Patentansprüche

1. Bewegbare Maschine (1), mit einem Sicherheitssystem (2), mit einer Sicherheitssteuerung (7), mit einem Lokalisierungssystem (3), mit einem Entfernungssensor (4) zur mindestens flächigen Überwachung eines Überwachungsbereiches und mit einer Konturerkennungseinheit (6),
wobei mittels dem Lokalisierungssystem (3) eine Position (9) eines Sicherheitsortes (8) identifizierbar ist, wobei das Lokalisierungssystem (3) eine Position der bewegbaren Maschine (1) auf einer Fläche oder im Raum bestimmt, wobei die Positionsbestimmung lokal mittels Funk, durch ein Ultra-Wide-Band-System erfolgt,
und mittels dem Entfernungssensor (4) und der Konturerkennungseinheit (6) eine Kontur (10) des Sicherheitsortes (8) identifizierbar ist, wobei der Sicherheitsort (8) durch zwei voneinander unabhängige Merkmale eindeutig identifizierbar ist, wobei die Merkmale die Position (9) und die Kontur (10) des Sicherheitsortes (8) sind, wobei der Sicherheitsort (8) durch ein redundantes, diversitäres System identifiziert ist,
wobei bei Identifizierung der Position (9) des Sicherheitsortes (8) und der Kontur (10) des Sicherheitsortes (8) mittels der Sicherheitssteuerung (7) eine Veränderung der Sicherheitsfunktion des Sicherheitssystems (2) erfolgt, wobei das Lokalisierungssystem (3) eine Position der bewegbaren Maschine (1) auf einer Fläche oder im Raum bestimmt, wobei das Lokalisierungssystem (3) eine Karte oder ein Kartenmodel aufweist, wobei die Sicherheitsorte (8) in der Karte oder dem Kartenmodel eingetragen sind, wobei die Position (9) des Sicherheitsortes (8) jeweils mindestens eine Positionskennung aufweist, wobei die Kontur (10) eines Sicherheitsortes (8) jeweils mindestens eine Konturkennung aufweist und die Konturkennung und die Positionskennung eines Sicherheitsortes (8) über eine Korrelationsregel verknüpft sind.

2. Bewegbare Maschine (1) nach Anspruch 1, wobei der Entfernungssensor (4) ein Laserscanner (5), ein Sicherheitslaserscanner, eine 3D-Kamera, eine Stereokamera oder eine Lichtlaufzeitkamera ist.

3. Bewegbare Maschine (1) nach mindestens einem der vorhergehenden Ansprüche, wobei mittels dem Lokalisierungssystem (3) und dem Entfernungssensor (4) eine Position (9) des Sicherheitsortes (8) identifizierbar ist.

4. Bewegbare Maschine (1) nach mindestens einem der vorhergehenden Ansprüche, wobei die Sicherheitssteuerung (7) an das Lokalisierungssystem (3) und/oder an die Konturerkennungseinheit (6) Testvektoren (18) sendet und empfängt.

5. Bewegbare Maschine (1) nach mindestens einem der vorhergehenden Ansprüche, wobei das Sicherheitssystem (2) mindestens einen Sensor aufweist, der in der Lage ist, eine Bewegung, eine Positionsänderung und/oder eine Geschwindigkeit zu messen.

6. Bewegbare Maschine (1) nach mindestens einem der vorhergehenden Ansprüche, wobei das Sicherheitssystem (2) mindestens einen Encoder (19) aufweist, welcher eine Drehposition eines Rades erfasst, wobei der Encoder (19) mit der Sicherheitssteuerung (7) verbunden ist.

7. Bewegbare Maschine (1) nach mindestens einem der vorhergehenden Ansprüche, wobei der Sicherheitsort (8) eine Reflektor-Marke aufweist.

8. Verfahren mit einer bewegbaren Maschine (1), mit einem Sicherheitssystem (2), mit einer Sicherheitssteuerung (7), mit einem Lokalisierungssystem (3), mit einem Entfernungssensor (4) zur mindestens flächigen Überwachung eines Überwachungsbereiches und mit einer Konturerkennungseinheit (6),
wobei mittels dem Lokalisierungssystem (3) eine Position (9) eines Sicherheitsortes (8) identifiziert wird, wobei das Lokalisierungssystem (3) eine Position der bewegbaren Maschine (1) auf einer Fläche oder im Raum bestimmt, wobei die Positionsbestimmung lokal mittels Funk, durch ein Ultra-Wide-Band-System erfolgt,
und mittels dem Entfernungssensor (4) und der Konturerkennungseinheit (6) eine Kontur (10) des Sicherheitsortes (8) identifiziert wird, wobei der Sicherheitsort (8) durch zwei voneinander unabhängige Merkmale eindeutig identifizierbar ist, wobei die Merkmale die Position (9) und die Kontur (10) des Sicherheitsortes (8) sind, wobei der Sicherheitsort (8) durch ein redundantes, diversitäres System identifiziert wird,
wobei bei Identifizierung der Position (9) des Sicherheitsortes (8) und der Kontur (10) des Sicherheitsortes (8) mittels der Sicherheitssteuerung (7) eine Veränderung der Sicherheitsfunktion des Sicherheitssystems (2) durchgeführt wird, wobei das Lokalisierungssystem (3) eine Position der bewegbaren Maschine (1) auf einer Fläche oder im Raum bestimmt, wobei das Lokalisierungssystem (3) eine Karte oder ein Kartenmodel aufweist, wobei die Sicherheitsorte (8) in der Karte oder dem Kartenmodel eingetragen sind, wobei die Position (9) des Sicherheitsortes (8) jeweils mindestens eine Positionskennung aufweist, wobei die Kontur (10) eines Sicherheitsortes (8) jeweils mindestens eine Konturkennung aufweist und die Konturkennung und die Positionskennung eines Sicherheitsortes (8) über eine Korrelationsregel verknüpft sind.

## Claims

1. A movable machine (1), comprising a safety system (2), a safety controller (7), a localization system (3), a distance sensor (4) for an at least areal monitoring of a monitored zone, and a contour recognition unit (6),
wherein
a position (9) of a safe location (8) can be identified by means of the localization system (3), wherein the localization system (3) determines a position of the movable machine (1) on a surface or in space, wherein the position determination takes place locally by means of radio, by an ultra-wideband system (UWB),
and a contour (10) of the safe location (8) can be identified by means of the distance sensor (4) and the contour recognition unit (6), wherein the safe location (8) can be uniquely identified by two mutually independent features, wherein the features are the position (9) and the contour (10) of the safe location (8), wherein the safe location (8) is identified by a redundant, diverse system,
wherein a change in the safety function of the safety system (2) takes place by means of the safety controller (7) on an identification of the position (9) of the safe location (8) and of the contour (10) of the safe location (8), wherein the localization system (3) determines a position of the movable machine (1) on a surface or in space, wherein the localization system (3) has a map or a map model, wherein the safe locations (8) are entered in the map or the map model, wherein the position (9) of the safe location (8) respectively has at least one position identifier, wherein the contour (10) of a safe location (8) respectively has at least one contour identifier and the contour identifier and the position identifier of a safe location (8) are linked via a correlation rule.

2. A movable machine (1) according to claim 1, wherein the distance sensor (4) is a laser scanner (5), a safety laser scanner, a 3D camera, a stereo camera or a time of flight camera.

3. A movable machine (1) according to at least one of the preceding claims, wherein a position (9) of the safe location (8) can be identified by means of the localization system (3) and the distance sensor (4).

4. A movable machine (1) according to at least one of the preceding claims, wherein the safety controller (7) transmits and receives test vectors (18) to/from the localization system (3) and/or the contour recognition unit (6).

5. A movable machine (1) according to at least one of the preceding claims, wherein the safety system (2) has at least one sensor which is able to measure a movement, a change of position and/or a speed.

6. A movable machine (1) according to at least one of the preceding claims, wherein the safety system (2) has at least one encoder (19) which detects a rotary position of a wheel, wherein the encoder (19) is connected to the safety controller (7).

7. A movable machine (1) according to at least one of the preceding claims, wherein the safe location (8) has a reflector mark.

8. A method using a movable machine (1) comprising a safety system (2), a safety controller (7), a localization system (3), a distance sensor (4) for an at least areal monitoring of a monitored zone, and a contour recognition unit (6),
wherein
a position (9) of a safe location (8) is identified by means of the localization system (3), wherein the localization system (3) determines a position of the movable machine (1) on a surface or in space, wherein the position determination takes place locally by means of radio, by an ultra-wideband system (UWB),
and a contour (10) of the safe location (8) is identified by means of the distance sensor (4) and the contour recognition unit (6), wherein the safe location (8) can be uniquely identified by two mutually independent features, wherein the features are the position (9) and the contour (10) of the safe location (8),
wherein the safe location (8) is identified by a redundant, diverse system,
wherein a change in the safety function of the safety system (2) is performed by means of the safety controller (7) on an identification of the position (9) of the safe location (8) and of the contour (10) of the safe location (8), wherein the localization system (3) determines a position of the movable machine (1) on a surface or in space, wherein the localization system (3) has a map or a map model, wherein the safe locations (8) are entered in the map or the map model, wherein the position (9) of the safe location (8) respectively has at least one position identifier, wherein the contour (10) of a safe location (8) respectively has at least one contour identifier and the contour identifier and the position identifier of a safe location (8) are linked via a correlation rule.

## Revendications

1. Machine mobile (1) comprenant un système de sécurité (2), une commande de sécurité (7), un système de localisation (3), un capteur de distance (4) pour la surveillance au moins surfacique d'une zone à surveiller, et une unité de reconnaissance de contour (6),
dans laquelle
une position (9) d'un emplacement de sécurité (8) peut être identifiée au moyen du système de localisation (3), le système de localisation (3) déterminant une position de la machine mobile (1) sur une surface ou dans l'espace, la détermination de la position étant effectuée localement par radio au moyen d'un système à ultra-large bande,
et un contour (10) de l'emplacement de sécurité (8) peut être identifié au moyen du capteur de distance (4) et de l'unité de reconnaissance de contour (6), l'emplacement de sécurité (8) pouvant être identifié de manière univoque par deux caractéristiques indépendantes l'une de l'autre, les caractéristiques étant la position (9) et le contour (10) de l'emplacement de sécurité (8), l'emplacement de sécurité (8) étant identifié par un système diversitaire redondant,
une modification de la fonction de sécurité du système de sécurité (2) est effectuée lors de l'identification de la position (9) de l'emplacement de sécurité (8) et du contour (10) de l'emplacement de sécurité (8) au moyen de la commande de sécurité (7), le système de localisation (3) déterminant une position de la machine mobile (1) sur une surface ou dans l'espace, le système de localisation (3) présentant une carte ou un modèle de carte, les emplacements de sécurité (8) étant inscrits dans la carte ou dans le modèle de carte, la position (9) de l'emplacement de sécurité (8) présentant au moins un identifiant de position respectif, le contour (10) de l'emplacement de sécurité (8) présentant au moins un identifiant de contour respectif, et l'identifiant de contour et l'identifiant de position d'un emplacement de sécurité (8) étant liés par une règle de corrélation.

2. Machine mobile (1) selon la revendication 1,
dans laquelle le capteur de distance (4) est un scanner laser (5), un scanner laser de sécurité, une caméra 3D, une caméra stéréo ou une caméra à temps de vol.

3. Machine mobile (1) selon l'une au moins des revendications précédentes, dans laquelle une position (9) de l'emplacement de sécurité (8) peut être identifiée au moyen du système de localisation (3) et du capteur de distance (4).

4. Machine mobile (1) selon l'une au moins des revendications précédentes, dans laquelle la commande de sécurité (7) émet des vecteurs de test (18) vers le système de localisation (3) et/ou vers l'unité de détection de contour (6), et les reçoit.

5. Machine mobile (1) selon l'une au moins des revendications précédentes, dans laquelle le système de sécurité (2) comprend au moins un capteur apte à mesurer un mouvement, un changement de position et/ou une vitesse.

6. Machine mobile (1) selon l'une au moins des revendications précédentes, dans laquelle le système de sécurité (2) comprend au moins un encodeur (19) détectant une position de rotation d'une roue, l'encodeur (19) étant relié à la commande de sécurité (7).

7. Machine mobile (1) selon l'une au moins des revendications précédentes, dans laquelle l'emplacement de sécurité (8) comprend un repère à réflecteur.

8. Procédé avec une machine mobile (1) comprenant un système de sécurité (2), une commande de sécurité (7), un système de localisation (3), un capteur de distance (4) pour la surveillance au moins surfacique d'une zone à surveiller, et une unité de reconnaissance de contour (6),
dans lequel
une position (9) d'un emplacement de sécurité (8) est identifiée au moyen du système de localisation (3), le système de localisation (3) déterminant une position de la machine mobile (1) sur une surface ou dans l'espace, la détermination de la position étant effectuée localement par radio au moyen d'un système à ultra-large bande,
et un contour (10) de l'emplacement de sécurité (8) est identifié au moyen du capteur de distance (4) et de l'unité de reconnaissance de contour (6), l'emplacement de sécurité (8) pouvant être identifié de manière univoque par deux caractéristiques indépendantes l'une de l'autre, les caractéristiques étant la position (9) et le contour (10) de l'emplacement de sécurité (8), l'emplacement de sécurité (8) étant identifié par un système diversitaire redondant,
une modification de la fonction de sécurité du système de sécurité (2) est effectuée lors de l'identification de la position (9) de l'emplacement de sécurité (8) et du contour (10) de l'emplacement de sécurité (8) au moyen de la commande de sécurité (7), le système de localisation (3) déterminant une position de la machine mobile (1) sur une surface ou dans l'espace, le système de localisation (3) présentant une carte ou un modèle de carte, les emplacements de sécurité (8) étant inscrits dans la carte ou dans le modèle de carte, la position (9) de l'emplacement de sécurité (8) présentant au moins un identifiant de position respectif, le contour (10) de l'emplacement de sécurité (8) présentant au moins un identifiant de contour respectif, et l'identifiant de contour et l'identifiant de position d'un emplacement de sécurité (8) étant liés par une règle de corrélation.
